(19) **Europäisches Patentamt / European Patent Office / Office européen des brevets**

(11) **EP 1 788 896 B1**

(12) **EUROPEAN PATENT SPECIFICATION**

(45) Date of publication and mention
of the grant of the patent:
**05.03.2014 Bulletin 2014/10**

(21) Application number: **05776870.7**

(22) Date of filing: **02.09.2005**

(51) Int Cl.:
*A23L 1/40* (2006.01)    *A23L 1/00* (2006.01)
*A23L 1/22* (2006.01)

(86) International application number:
**PCT/NL2005/000637**

(87) International publication number:
**WO 2006/025742 (09.03.2006 Gazette 2006/10)**

(54) **HEAT STABLE FLAVOURING COMPOSITIONS**

HITZESTABILE AROMAZUSAMMENSETZUNGEN

COMPOSITIONS AROMATISANTES THERMOSTABLES

(84) Designated Contracting States:
**AT BE BG CH CY CZ DE DK EE ES FI FR GB GR HU IE IS IT LI LT LU LV MC NL PL PT RO SE SI SK TR**

(30) Priority: **02.09.2004 EP 04077453**

(43) Date of publication of application:
**30.05.2007 Bulletin 2007/22**

(73) Proprietor: **Givaudan Nederland Services B.V.**
**1411 GP Naarden (NL)**

(72) Inventors:
• **WITTEVEEN, Frans**
**NL-3833 CM Leusden (NL)**
• **CAMPANILE, Fabio**
**NL-1015 JK Amsterdam (NL)**

• **DOORN, Aloysius, Lambertus**
**NL-3893 CB Zeewolde (NL)**
• **BURGER, Jack**
**8244 GE Lelystad (NL)**
• **CORDA, Pino**
**NL-1273 CZ Huizen (NL)**

(74) Representative: **Givaudan Patents**
**Givaudan Schweiz AG**
**Ueberlandstrasse 138**
**8600 Dübendorf (CH)**

(56) References cited:
**EP-A- 0 426 428      WO-A-01/35764**
**WO-A-02/065858      FR-A- 2 784 895**
**US-A- 5 064 669      US-A1- 2002 192 352**

EP 1 788 896 B1

**Description**

**Field of the Invention**

The present invention relates to the field of flavouring of food compositions. More particularly it concerns encapsulation of volatile flavouring substances to provide protection against, for example, moisture and oxidation and a controlled release of the flavouring substances contained in the encapsulate under conditions of use, notably food preparation. Encapsulates according to this invention are particularly suitable for application in food products (including beverages) whose preparation comprises one or more heat processing steps as well as in chewing gum.

**Background of the Invention**

Encapsulation systems represent an important field of interest for the flavour industry, and are usually designed to achieve two objectives.

The first goal is to protect the flavour ingredients entrapped in such systems. In fact, these systems must be capable of protecting an active material encapsulated therein from different kinds of degradation and at the same time prevent the escape of the especially volatile flavouring component(s). Oxidation of flavours, such as essential oils, resulting in off-notes, poses serious problems for the flavour and food industry.

Another common objective of flavour encapsulation systems is to control the release of the flavour ingredients during preparation and/or consumption of the food product in which they have been applied. In particular, if the flavour ingredient is volatile, it is generally of much importance to effectively control said release.

WO01/35764 addresses the stabilisation of flavours during dry storage, specifically preventing oxidation, critical for citrus components, and enhancing flavour retention. The flavour carrier system comprises spray-dried particles containing 40-80 wt% high molecular weight film forming carbohydrate, 10-30 wt% mono, di and/or trisaccharides and 10-30 wt% maltodextrin, is designed to dissolve rapidly in contact with water and to quickly release the flavour ingredients contained therein.

WO02/065858 describes granular flavour delivery systems comprising carbohydrate material, such as mono, di and trisaccharides, modified starches and/or maltodextrin and an amount of prehydrated agar agar of 1-7 wt%. This delivery system, in the presence of water, rehydrates and forms an agar agar-carbohydrate gel physically entrapping the flavour in the form of oil droplets.

While the inclusion of the flavour in a carbohydrate matrix comprising a poorly soluble hydrocolloid to reduce the dissolution speed of the matrix in water, e.g. during cooking, so as to preserve flavour impact represents an improvement, it does not prevent quick release of the flavour ingredients once the carrier matrix has dissolved. It is well known in the art that waxes, fats, oils, fatty acids and their derivatives can be incorporated in water based food products to modify the vapour pressure of lipophilic flavour substances and consequently the rate at which these substances are released. In food products containing water and lipids, flavour substances will distribute across the aqueous phase and lipid phase until an equilibrium condition is achieved which can be described by the oil/water partition coefficient, which is defined as:

$$P_{OW} = \frac{C_{oilphase}}{C_{waterphase}}$$

In a typical water based food system, such as a soup or a sauce, a relatively large fraction of the flavouring substances is dissolved in the aqueous phase. Due to the predominantly lipophilic nature of these volatile flavouring substances, the addition of lipids to such water-based food systems will substantially reduce (a) the concentration of the lipophilic flavour substances in the water phase, (b) the vapour pressure of these same substances and hence also (c) the release rate of the lipophilic flavour substances. This principle is for example applied in practice by preparing dry flavourings from oil-in-water emulsions, rather than from aqueous solutions, to increase the flavour retention in the final dry product.

It has been suggested that the use of a solid lipid phase in water based food compositions enables more effective flavour retention, probably due to reduced diffusion rates compared to the use of a liquid lipid phase.

US 2002/0192352 discloses fat encapsulation compositions produced by forming a sandwich of a layer of a high melting fat, an amount of dry ingredient and another layer of high melting fat and subjecting said sandwich to pressure. The dry ingredient may be prepared from a liquid ingredient, e.g. a liquid flavour, by moistening a carrier, such as gum Arabic, starch or maltodextrin with the liquid flavour. Said carrier may, according to this US patent application constituet up to 25 wt% of the encapsulation composition. The product has the form of a pellet wherein the dry ingredient is coated by a compressed layer of the high melting fat.

US 5,064,669 discloses controlled release flavouring powders obtained by mixing a melt of a high melting fat or wax and one or more emulsifiers with a water containing flavour composition comprising a texture conditioning agent and subsequently chilling the obtained mixture so as to yield a powder. Said texture conditioning agent may comprise silicon dioxide, powdered cellulose, puffed dextrin, maltodextrin or pregelatinized starches, wich agent will absorb or hold the water containing flavour composition. The resulting powder will thus comprise particles wherein cores of the texture conditioning agent carrying the water containing flavour enrobed by a solidified layer of the fat and emulsifier. The flavouring compositions according to US 5,064,669 are specifically designed for use in microwave cooking and the inclusion of an amount of at least 15 wt% of water is essential for controlled release of the flavouring during microwave cooking.

However, as reported in literature (cf. Source Book of Flavour, Aspen, 1999), solid lipid encapsulation systems do not effectively protect flavouring substances under dry storage conditions, especially if the flavouring substances are hydrophobic. In fact, under such conditions, the crystalline structure of solid lipids is not able to retain the flavour, resulting in poorer performance in comparison with typical carbohydrate encapsulation systems.

Hence, there still is an unmet need for flavour encapsulation systems providing improved flavour retention in water based food applications that involve one or more heat processing steps while at the same time sufficiently entrapping and protecting the flavouring substances to allow prolonged dry storage of the flavour encapsulate.

## Summary of the Invention

The present inventors have surprisingly found that this objective can be met by providing a particulate flavouring composition comprising, based on the total weight of the composition, 0.1-40 wt% of flavouring substances, 10-90 wt% of one or more hydrocolloids and 0.1-50 wt% of a lipid material having a melting point above 75 °C.

The present flavouring composition in addition to providing protection against, for example, oxygen and moisture during storage and processing, also exhibits advantageous controllable delayed release-characteristics that make it particularly suitable for use in water based food applications involving one or more heating cycles during processing and/or preparation, e.g. pasteurisation, sterilisation, cooking and/or baking.

Without wishing to be bound by theory, the inventors believe that in the present particulate flavouring composition, solid high melting lipid elements, which are entrapped in a matrix comprising the one or more hydrocolloids, function as flavour carriers. The hydrocolloid matrix retains the flavouring substances and protects them against degradation by environmental factors, such as oxygen and moisture, during dry storage of the composition. When the present flavouring composition is combined with an aqueous phase, e.g. in water based foodstuffs, the hydrocolloid will start to swell and the lipid elements and flavouring substances remain entrapped within the swollen hydrocolloid matrix. Once the swollen particles finally disintegrate, e.g. during one or more heating steps, the lipid elements are released from the matrix, still retaining and protecting at least a fraction of the flavouring substances originally contained in the particulate flavouring composition. Once the swollen hydrocolloid matrix has disintegrated the flavouring substances will be released, especially those flavouring substances that are not contained in the high melting lipid material.

The presence of a very high melting lipid material in the present flavouring composition offers the important advantage that flavouring substances contained in this material will be released relatively slowly. Only when the lipid elements have been melted almost completely, will the release rate increase substantially to create pronounced flavour impact. Thus, in comparison to the flavouring delivery systems of the prior art, the flavouring compositions of this invention are capable of delivering a longer lasting flavour impression, especially in warm and hot applications, typically covering time spans between 1 min and 4 hrs. Furthermore, the present flavouring compositions offer the benefit that the duration of the full flavour impact can be delayed until the moment of consumption of the food product in which they have been applied. In addition, the present composition enables delivery of a flavour burst during a relatively short period of time around the moment of consumption, thereby enhancing the perceived flavour impact.

It was also found that the present particulate flavouring composition provides particular advantages when applied in confectionery products, e.g. chewing gum, which upon consumption is subjected to shear and continuous hydration, such that the hydrocolloid will start to swell and disintegrate, the lipid elements carrying the flavouring substances remaining entrapped until the swollen particles completely disintegrate after prolonged chewing.

## Description of the Figures

Fig. 1 shows a schematic representation of a particle contained in the particulate flavouring composition according to the present invention, wherein A represents a discrete element of the high melting lipid material carrying at least a fraction of the flavouring substances, said discrete element being entrapped in hydrocolloid matrix B.

Fig. 2 shows the results of a GC headspace analysis of two samples of water, one of which contains the present controlled release flavouring composition and the other one comprising a prior art flavour encapsulate, during a typical cooking process.

## Detailed description of the invention

Accordingly, in a first aspect, the present invention relates to particulate flavouring compositions comprising, based on the total weight of the composition, 0.1-40 wt% of flavouring substances, 10-90 wt% of one or more hydrocolloids, and 0.1-50 wt% of a lipid material having a melting point above 75 °C.

Throughout this document the terms "flavouring" and "flavour" are used interchangeably as they are deemed to be synonyms.

The term "hydrocolloid" as used herein refers to hydrophilic macromolecules such as polysaccharides, proteins and derivatives thereof, which macromolecules will swell when dispersed in water to produce a viscous dispersion or solution. Typical examples of hydrocolloids are gelling agents and thickening agents.

The flavouring composition is a particulate composition, preferably comprising particles having a volume weighted average diameter in the range of 50-3000 $\mu$m, preferably in the range of 125-3000 $\mu$m, more preferably in the range of 250-1400 $\mu$m, most preferably in the range of 250-1000 $\mu$m.

The term "volume weighted average diameter" refers to the volume based average diameter of the particles, which can suitably be determined using a Beckman Coulter LS Particle Size Analyzer or by employing a conventional sieving method.

The flavouring compositions according to the present invention effectively entrap the flavourings and/or prevent degradation thereof during dry storage of said flavouring composition as well as during storage and processing of the food products they are applied in, for example soups. The present flavouring composition will release the flavouring with a controllable delay during heat processing of the food product, the delay-time being dependent on the relative amount of the hydrocolloid, the relative amount of the high melting lipid material and the melting point of said lipid material. Also the rate at which the hydrocolloid matrix disintegrates is an important factor and is dependent on the nature and type of hydrocolloids employed.

Flavourings used in the present invention typically may include a variety of both natural and synthetic flavour ingredients. They include single substances as well as complex mixtures of synthetic and/or natural substances. Flavour ingredients that can suitably be used in food applications are, for instance, described in e.g. S. Arctander, Perfume and Flavor Materials of Natural Origin (Elisabeth, N.J., USA, 1996), in T.E. Furia et al, CRC Fenaroli's Handbook of Flavor Ingredients, 2nd Ed. (Cleveland, CRC Press Inc., 1975), and in H.B. Heath, Source Book of-Flavors (The Avi Publishing Company Inc., Westport, Connecticut, 1981).

The flavouring compositions according to this invention may be used advantageously to encapsulate volatile or labile components which may be in liquid or in solid form, and which are typically insoluble or poorly soluble in water. The flavouring present within the particulate composition of the present invention may contain as flavouring substances e.g. aldehydes, acetales, ketones, terpenes, esters, pyrazines and lactones. The flavouring may suitably contain essential oils, such as citrus or essential oils of herbs and spices that contain the aforementioned flavouring substances.

Examples of flavouring substances which may be used within the scope of the invention are: geraniol, geranyl acetate, linalool, linalyl acetate, tetrahydrolinalool, citronellol, citronellyl acetate, dihydro myrcenol, dihydro myrcenyl acetate, tetrahydro myrcenol, terpineol, terpinyl acetate, nopol, nopyl acetate, 2-phenylethanol, 2-phenylethyl acetate, benzyl alcohol, benzyl acetate, benzyl salicylate, styrallyl acetate, benzyl benzoate, amyl salicylate, dimethylbenzyl carbinol, trichloromethylphenylcarbinyl acetate, p-tert. butylcyclohexyl acetate, isononyl acetate, vetiveryl acetate, vetiverol, $\alpha$-hexyl-cinnamaldehyde, 2-methyl-3-(p-tert.-butylphenyl)-propanal, 2-methyl-3-(p-isopropyl phenyl)-propanal, 3-(p-tert.butylphenyl)-propanal, tricyclodecenyl acetate, tricyclo-decenyl propionate, 4-(4-hydroxy-4-methylpentyl)-3-cyclohexene carbaldehyde, 4-(4-methyl-3-pentenyl)-3-cyclohexene carbaldehyde, 4-acetoxy-3-pentyl-tetrahydropyran, 3-carboxymethyl-2-pentyl-cyclopentane, 2-n-heptyl-cyclopentanone, 3-methyl-2-pentyl-2-cyclopentanone, n-decanal, n-dodecanal, dec-9-en-1-ol, phenoxy-ethyl isobyutyrate, phenylacetaldehyde dimethylacetal, phenylacetaldehyde diethylacetal, geranyl nitrile, citronellyl nitrile, cedryl acetate, 3-iso-camphyl cyclohexanol, cedrylmethyl ether, isolongifolanone, aubepine nitrile, aubepine, heliotropine, coumarin, eugenol; vanillin, diphenyl oxide, hydroxy citronellal, ionones, methyl ionones, isomethyl ionones, irones, cis-3-hexenol and esters thereof and mixtures thereof. Other examples which are typically preferred in savoury applications include 2-methyl-3-furanthiol, 2-ethyl-4-methyl thiazole, 2-isobutyl-3-methoxy pyrazine, dimethyl disulphide, 2-acetyl thiazole and 2-mercapto-3-pentanone.

The flavouring substance is typically comprised in the present composition in an amount ranging from 0.1-40 wt%, preferably 1-30 wt%, even more preferably 5-20 wt%, based on the total weight of the composition.

According to the present invention, the lipid material is selected from waxes, fatty acids, salts of fatty acids, esters of fatty acids and mixtures thereof. It is particularly advantageous to use a lipid material that remains solid once released from the hydrocolloid matrix during heat processing of the foodstuff. In a preferred embodiment fatty acid salts such as salts of saturated $C_{16}$-$C_{22}$ fatty acids, e.g. salts of stearates or palmitates, are characterised by a melting point above 75 °C, more preferably above 90 °C, and most preferably above 100 °C, are used. In a most preferred embodiment the lipid material is selected from magnesium stearate, aluminium stearate, sodium stearate, magnesium palmitate, aluminum palmitate, sodium palmitate and mixtures thereof.

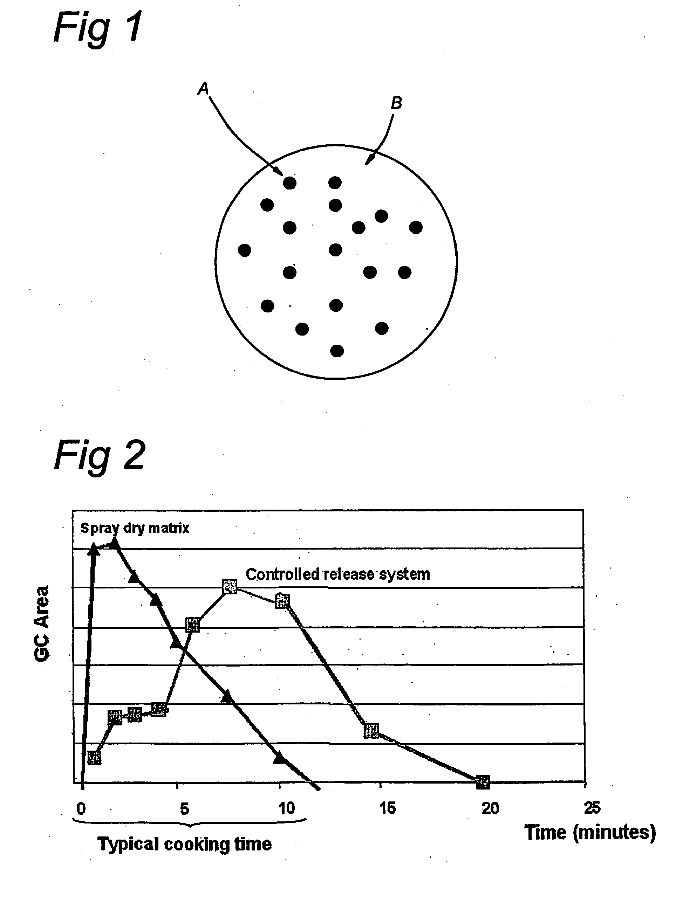

It is believed that the high melting temperature of the lipid material allows protection of the entrapped flavour and prevents rapid release of the flavour during cooking applications. Preferably the particulate flavouring composition comprises the lipid in an amount of 0.1-40 wt%, more preferably 0.5-30 wt%, most preferably, 1-10 wt%, based on the total weight of the composition. The high melting lipid material is preferably dispersed in the hydrocolloid matrix in the form of discrete elements, as can be seen in fig. 1, typically having a size ranging from 0.1-50 μm, more preferably from 0.1-10 μm. Preferably, the size of the lipid elements is chosen such that they are invisible in food application and easily dispersible into a food matrix.

Beside the high melting lipid material, the present composition may also suitably contain lower melting lipids. As explained herein before, the release rate of lipophilic flavouring substances from aqueous systems decreases by the addition of lipids. By the combined application of the high melting lipid material and lower melting lipids the flavour release characteristics of the present composition may be tailored in such a way that in hot applications the particulate composition will initially predominantly release flavouring substances that are contained in the lower melting lipids, followed by a delayed release of the flavouring substances entrapped in the high melting lipid material.

According to a preferred embodiment the present composition comprises a hydrocolloid selected from the group consisting of xanthan, agar, locust bean gum, guar gum, cassia gum, tara gum, gum tragacanth, oat gum, karaya gum, tara gum, gum arabic, gum ghatti, polydextrose, cyclodextrin, native gellan, deacylated gellan, gelatin, alginate, propylene glycol alginate, pectin, carrageenan, furcelleran, microcrystalline cellulose, processed eucheuma seaweed, sodium carboxymethylcellulose, methylcellulose and other modified cellulose derivatives, native starch, modified starch, whey proteins, caseinates, and mixtures thereof. Preferably the present composition comprises the hydrocolloid in an amount ranging from 30-85 wt%, more preferably 50-80 wt%, most preferably 60-70 wt%, based on the total weight of the composition.

In a preferred embodiment the hydrocolloid employed is a slowly dissolving hydrocolloid. The term 'slowly dissolving hydrocolloid' as used herein refers to hydrocolloids that are either poorly soluble in cold and hot water or slowly hydrating. The use of a slowly dissolving hydrocolloid advantageously imparts additional slow release characteristics to the particulate flavour composition. Upon application of the particulate flavouring composition in a water based food product the hydrocolloid matrix within the particles will swell whilst entrapping the discrete lipid elements contained in the particles. The swollen particles will only slowly disintegrate, e.g. during one or more heating steps. Examples of suitable slowly dissolving hydrocolloids that can be used according to the present invention include xanthan gum, locust bean gum, agar-agar, guar gum, gellan gum, alginate, pectin and mixtures thereof. According to a particularly preferred embodiment the hydrocolloid is xanthan gum

In another preferred embodiment, the present composition, in addition to the slowly dissolving hydrocolloid, comprises a film forming carbohydrate. Suitable film forming carbohydrates are film forming alginates, mucilages, modified starches, cellulose derivatives and mixtures thereof. The film forming carbohydrate is preferably selected from modified starches, cellulose derivatives and mixtures thereof. Even more preferably, the film forming carbohydrate is selected from methyl cellulose, ethyl cellulose, hydroxyethyl cellulose, hydroxypropyl cellulose, hydroxypropyl methyl cellulose, carboxymethyl cellulose, starches, and mixtures thereof. The film forming carbohydrate is advantageously comprised in the composition in an amount of 0.1-40 wt%, preferably 5-20%, more preferably 5-10.wt%, based on the total weight of the composition.

The present particulate flavouring composition may further comprise a carbohydrate plugging material. The term 'plugging material', as used herein, refers to a substance that can be used to modify the glass transition temperature and the melting behaviour of the hydrocolloid matrix, thereby providing an improved oxygen barrier to the encapsulated flavour and preventing flavour from leaking out of the encapsulate. The plugging material may suitably be selected from the group of mono, di and trisaccharides, such as glucose, fructose, maltose, sucrose, raffinose, xylitol, sorbitol and mixtures thereof. These saccharides may also be provided in the form of materials having a high content of such sugars, such as fruit juice solids. Preferably, the plugging material is selected from maltose, sucrose, xylitol, sorbitol and combinations thereof. The plugging material is typically comprised in the present particulate composition in an amount ranging from 0.5-30 wt%, preferably 1-10 wt%, based on the total weight of the composition.

It was found that emulsifiers may advantageously be incorporated in the present composition. Although the inventors do not wish to be bound by theory it is believed that the emulsifiers promote adherence of the lipid components (together with the flavouring substances contained therein) of the present composition to solid food particles after disintegration of the composition in an aqueous environment. Thus, this embodiment of the invention enables targeted delivery of the flavouring substances to solid food particles (e.g. pasta or noodles) after disintegration of the particulate composition. Examples of suitable emulsifiers include lecithin, Spans (e.g. sorbitan mono oleate) and Tweens (e.g.

polyoxyethylene sorbitan mono oleate).

In addition, it is believed that said emulsifiers may enable adherence of the lipid components of the present composition to the oral mucosa, which may further add to an improved perception of flavour upon consumption of the product comprising the composition according to the present invention.

Accordingly, in a preferred embodiment the present invention relates to flavouring compositions comprising, based on the total weight of the composition:

> 0.1-40 wt% of one or more film forming cabohydrates;
> 0.5-30 wt% of one or more mono, di or trisaccharides;
> 5-30 wt% of flavouring substance;
> 50-80 wt% of the slowly dissolving hydrocolloid material; and
> 1-10 wt% of the lipid material.

It is noted that the present invention also encompasses particulate flavouring compositions that comprise inert core particles or additional coating layers. The weight percentages of the components present in the particulate flavouring composition are based on the total composition excluding the components contained in the inert core particles or additional coating layers.

The bulk density of the present particulate composition is typically within the range of 300-1000 g/l. Preferably the bulk density of the present composition is within the range of 500-800 g/l.

Although particulate compositions such as those according to the present invention are generally obtained by drying emulsions of the particle components, such as disclosed in more detail hereafter, these compositions usually contain some water. Typically, the composition according to the present invention comprises 0-6 wt% of water, especially 0.3-4 wt% of water.

The particulate compositions may optionally comprise additional food-grade additives known in the art Typical, non limiting, examples of such additives include artificial sweeteners, preservatives, colourants, fillers such as maltodextrin, etc.

The particulate compositions according to the present invention are typically obtained by drying emulsions comprising a slowly dissolving hydrocolloid material, a lipid material as described herein before, one or more flavouring substances, and optionally one or more film forming carbohydrates, plugger substances and/or other desired additives, by any conventional process known in the art, such as spray-drying, drum drying, fluidised bed processing or freeze drying.

Preferably an emulsion is prepared by high shear mixing followed by fluidized bed drying, or extrusion. The high shear mixing process may suitably be employed to agglomerate the one or more hydrocolloids with the help of a slurry containing the other ingredients. Said slurry is preferably obtained by preparing an aqueous solution of the water-soluble components, which include the film forming carbohydrate and optionally the plugger material, and then adding thereto a mixture of the flavouring and the lipid phase, which mixture may suitably have been prepared by dispersing the flavouring into the molten lipid phase or by simply producing a suspension. The slurry is suitably homogenised at a temperature low enough to preserve the flavour integrity, preferably 30 °C. Then the slurry is added to a bed of the slowly dissolving hydrocolloid material, which is then agglomerated during the mixing procedure.

Another aspect of the present invention relates to a process of preparing a particulate flavouring composition comprising high shear mixing of water and a combination of, based on the total dry weight of the combination, 0.1-40 wt% of flavouring substances; 10-90 wt% of hydrocolloid material; and 0.1-50 wt% of lipid material having a melting point above 75 °C, and a subsequent drying step, preferably a fluidised bed drying step and to flavouring compositions obtainable by said process.

In an alternative embodiment the present particulate compositions may be prepared by a process that does not require drying such as dry extrusion. According to this embodiment the blend of dry ingredients comprised in the particulate composition is processed as such. Thus, in a preferred embodiment the present particulate flavouring composition is prepared by co-extruding a blend of the high melting lipid material, the flavouring substances and the one or more hydrocolloids.

The benefits of the present invention are particularly achieved if at least a fraction of the flavouring substances is entrapped in the high melting lipid material. In order to achieve this, it is not necessary to disperse the flavouring substances into the high melting lipid material prior to combining these components with the other ingredients of the particulate composition. Indeed, if these components are incorporated as separate ingredients, the lipophilic flavouring substances will automatically dissolve into the high melting lipid material over time.

The present invention further relates to the use of the present particulate flavouring compositions and/or the flavour delivery systems for flavouring food products.

A preferred embodiment of the invention relates to the use of the present particulate flavouring compositions and/or the flavour delivery systems for flavouring food systems undergoing a heat processing step consisting in boiling or simmering, such as in the case of soups, bouillon cubes, sauces, pasta and ready meals.

Another preferred embodiment of the invention relates to the use of the present particulate flavouring composition for flavouring confectionery products, especially chewing gum.

A typical embodiment of the invention, wherein the advantages of the invention become particularly evident, relates to the use of the present composition for flavouring canned soups. Such soups are commercially prepared by the sequential steps of mixing the main ingredients, shortly heating the soup at an elevated temperature, canning, sealing of the can, and heating the canned soup to an elevated temperature to render it commercially sterile. When the soup is prepared for consumption it is typically reheated to a temperature of about 100 °C in the case of home use for 10-30 minutes. As explained here above it is believed that the one or more hydrocolloids, especially slowly dissolving hydrocolloids, significantly delay disintegration of the flavouring particles; e.g. the present composition can be designed such that the hydrocolloid matrix only completely dissolves upon the final reheating step, only then releasing the lipid elements. The presence of the high melting lipid material prevents quick release of at least a fraction of the flavouring substances once the hydrocolloid matrix has dissolved thus ensuring sufficient flavour impact even after simmering of the soup for a considerable period of time.

Another typical advantage of the invention is believed to reside in the fact that the lipid elements with surface modification obtained through the addition of an emulsifier as mentioned here above, can adhere to solid food particles in an aqueous system, such as to pasta, e.g. during cooking, thus significantly improving the flavour impact of the final pasta product. Therefore another typical embodiment of the present invention relates to the use of the present composition for flavouring pasta products, or any other cooked food product containing solid particles or matrices.

Typically, according to the present invention the particulate flavouring composition is added in an amount of 0.01- 30 wt%, based on the total weight of the food system, more preferably 0.02-3%, most preferably 0.03-0.1.wt%.

The system can be applied to deliver sustained flavour release during cooking from 1 min up to 4 has well as a higher flavour impact at the moment of consumption.

Thus another aspect of the present invention relates to a process of flavouring a foodstuff comprising adding thereto a flavouring composition as defined herein before in an amount of 0.01- 30 wt%, typically before the foodstuff undergoes one or more heating steps or cycles. More particularly the flavouring composition is added before boiling/ cooking/simmering/sterilization etc.

Yet another aspect of the present invention relates to a food product comprising the particulate flavouring composition according to the present invention in an amount of 0.01- 30 wt%, based on the total weight of the composition, preferably 0.05-3 wt%. Typical examples of food products in which the benefits of the present flavouring composition are highly appreciated include soups, reconstitutable food products (e.g. bouillon cubes and dry soups), as well as confectionery products such as chewing gum. In a preferred embodiment the food product is a soup or a reconstitutable food product

The invention is further illustrated by means of the following examples.

## Examples

Example 1

A particulate flavouring composition in accordance with the present invention was prepared from the ingredients shown in Table 1 and referred to as system A.

A solution was prepared by disssolving CAPSUL™, sugar and maltodextrin in water and mixing at 80°C for 30 minutes. A suspension was made out of flavour and magnesium stearate (m.p. 140 °C) by thoroughly mixing the two components at 25°C. Next, the suspension was added to the above-mentioned solution and an emulsion was produced by homogenisation for 15 minutes at a temperature of 60 °C using an IKA Ultra Turrax T25 unit. This emulsion was subsequently sprayed into a high shear-mixing unit of the type Glatt VG25, which had been previously filled with the xanthan gum. At the end of the process, the resulting material was dried in a fluid bed unit for up to 30 min.

Table 1

| System A | |
|---|---|
| Xanthan Gum (g) | 4000 |
| CAPSUL™ (g) | 380 |
| Sucrose (g) | 140 |
| Maltodextrin DE 20 (g) | 140 |
| Basil flavour containing 80 wt% of triglyceride oil (g) | 507 |

(continued)

| System A | |
|---|---|
| Magnesium Stearate (g) | 101 |

Example 2

Flavouring system A was tested in a powder mix which was added to boiling water soon after pasta had been added. The sample of the powder mix composition was used for flavouring 100 g of pasta in 1l of water and had the following composition:

| | |
|---|---|
| Salt | 12 g |
| Maltodextrin DE20 | 5.5 g |
| Sun Flower Oil | 2.5 g |
| Flavouring system A | 0.8 g |

Another sample of the same powder mix was made except that the basil flavour was encapsulated in a system as described in example 2 (formulation b) of patent application WO 01/35764. The composition of said spray dried powder is reported in Table 2 and referred to as system B. This was added to the sample of the powder mix reported above, instead of system A, at such a level that equal amounts of basil flavour per g of pasta are delivered in both samples.

Table 2

| System B |
|---|
| 45 wt% CAPSUL™<br>15 wt% Malto Dextrine MD20<br>15 wt% Sugar<br>25 wt% Basil flavour |

Pastas flavoured with the two different powder mixes were evaluated by an expert panel. The perception of taste was expressed in relative intensity units by the panellists. Cooked pasta and the drained liquid were both evaluated. The results in Table 3 clearly show that the flavouring composition of the present invention delivers a much higher flavour impact after heat processing than the conventional spray dried flavouring compositions, using the same amount of flavouring.

Table 3

| | System B | System A |
|---|---|---|
| Pasta | - | ++ |
| Drained liquid | - | ++ |

Example 3

Formulation system A as described in the previous examples, except for the fact that limonene was incorporated therein instead of basil flavour, was added to boiling water at a dosage of 0.5 g/l and kept simmering for the length of the test. Analogously system B as described in the previous example with the exception of using limonene instead of basil flavour, was tested. The dosage of limonene applied was equal in both cases. Flavour release in the headspace was analysed with a GC unit, taking samples in time of the gas phase. The results of said GC analysis plotted against the cooking time (i.e. simmering time) are displayed in figure 2. From said figure the advantageous release characteristics in comparison with conventional flavour encapsulation systems, as described herein before, are clearly visible.

Example 4

Samples of reconstitutable soup are made having the composition shown in table 4. Flavour encapsulation systems A and B, as described in the previous examples, were used to encapsulate chicken flavour in an amount of 10 wt% based on the total dry weight of the encapsulation system. Said encapsulated flavourings were added to two samples of the reconstitutable soup in such amounts that both samples contained the same amount of 'liquid flavour'.

Table 4

| Ingredient | wt% (based on dry weight) |
| --- | --- |
| Salt | 73,06 |
| MSG | 16,28 |
| Sugar | 8,64 |
| Riboflavin | 0,01 |
| Caramel Powder | 0,27 |
| Celery | 0,80 |
| Lovage | 0,67 |
| Ribotide | 0,27 |

12 g of both samples of reconstitutable soup were each added to 500ml of cold water which was brought to boil in about 4-6 min. The soups were simmered for 6 min. Both soups were then evaluated and compared by an expert panel. There was general agreement between the panellists; while the soup comprising encapsulation system B had lost character and strength during boiling and simmering, much of the flavour of the soup comprising encapsulation system A had been preserved.

**Claims**

1. Particulate flavouring composition comprising, based on the total weight of the composition, 0.1-40 wt% of flavouring substances; 10-90 wt% of one or more hydrocolloids ; and 0.1-50 wt% of lipid material having a melting point above 75 °C, preferably above 90 °C, wherein the high melting lipid material is dispersed in a hydrocolloid matrix in the form of discrete elements.

2. Particulate flavouring composition according to claim 1, comprising the one or more hydrocolloids in an amount ranging from 30-85 wt%, based on the total weight of the composition.

3. Particulate composition according to claim 1 or 2, wherein the composition comprises 0-6 wt% of water.

4. Particulate flavouring composition according to any one of the preceding claims wherein the lipid material is selected from waxes, fatty acids, esters of fatty acids, salts of fatty acids and mixtures thereof.

5. Particulate flavouring composition according to any one of the preceding claims wherein the lipid material is selected from magnesium stearate, aluminium stearate, sodium stearate, magnesium palmitate, aluminium palmitate, sodium palmitate and mixtures thereof.

6. Particulate flavouring composition according to any one of the preceding claims, wherein the one or more hydrocolloids are selected from the group consisting of xanthan, agar, locust bean gum, guar gum, cassia gum, tara gum, gum tragacanth, oat gum, karaya gum, tara gum, gum arabic, gum ghatti, polydextrose, cyclodextrin, native gellan, deacylated gellan, gelatin, alginate, propylene glycol alginate, pectin, carrageenan, furcelleran, microcrystalline cellulose, processed eucheuma seaweed, sodium carboxymethylcellulose, methylcellulose and other modified cellulose derivatives, native starch, modified starch, whey proteins, caseinates, and mixtures thereof.

7. Particulate flavouring composition according to any one of the preceding claims wherein the one or more hydrocolloids are slowly dissolving hydrocolloids selected from the group consisting of xanthan gum, locust bean gum, agar-agar, guar gum, gellan gum, alginate, pectin and mixtures thereof, preferably xanthan gum.

8. Particulate flavouring composition according to any one of the preceding claims, comprising, based on the total weight of the composition:

0.1-40 wt% of one or more film forming carbohydrates, preferably 5-20 wt%;
0.5-30 wt% of one or more mono, di or trisaccharides, preferably 1-10 wt%;
5-30 wt% of flavouring substances;
50-80 wt% slowly dissolving hydrocolloids;
1-10 wt% of the lipid material.

9. Particulate flavouring composition according to claim 8 wherein the film forming carbohydrate is selected from the group of modified starches, cellulose derivatives and mixtures thereof.

10. Particulate flavouring composition according to any one of the preceding claims, said composition exhibiting a volume weighted average diameter within the range of 125-3000 $\mu$m, preferably in the range of 250-1000 $\mu$m.

11. Method of producing a particulate flavouring composition as defined in any of the preceding claims comprising high shear mixing of water and a combination of, based on the total weight of the combination, 0.1-40 wt% of flavouring substances; 10-90 wt% of one or more hydrocolloids; and 0.1-50 wt% of lipid material having a melting point above 75 °C, and a subsequent drying step.

12. Method of producing a particulate flavouring composition as defined in any of the preceding claims comprising dry blending a combination of 0.1-40 wt% of flavouring substances, 10-90 wt% of one or more hydrocolloids and 0.1-50 wt% of lipid material having a melting point above 75 °C and subsequently extruding the obtained dry blend.

13. Food product comprising 0.01-30 wt% of a particulate flavouring composition according to any one of claims 1 to 10.

14. Process of manufacturing a food product, said process comprising combining a flavouring composition according to any one of claims 1 to 10 with one or more other food ingredients.

**Patentansprüche**

1. Teilchenförmige Aromazusammensetzung, die in Bezug auf das Gesamtgewicht der Zusammensetzung Folgendes umfasst: 0,1-40 Gew.-% Aromastoffe, 10-90 Gew.-% ein oder mehrere Hydrokolloide; und 0,1-50 Gew.-% Lipidmaterial mit einem Schmelzpunkt oberhalb von 75°C, vorzugweise oberhalb von 90°C, wobei das Lipidmaterial mit hohem Schmelzpunkt in einer Hydrokolloidmatrix in Form von diskreten Elementen dispergiert ist.

2. Teilchenförmige Aromazusammensetzung nach Anspruch 1, die das eine oder die mehreren Hydrokolloide in einer Menge von 30-85 Gew.-% in Bezug auf das Gesamtgewicht der Zusammensetzung umfasst.

3. Teilchenförmige Aromazusammensetzung nach Anspruch 1 oder 2, wobei die Zusammensetzung 0-6 Gew.-% Wasser umfasst.

4. Teilchenförmige Aromazusammensetzung nach einem der vorhergehenden Ansprüche, wobei das Lipidmaterial aus Wachsen, Fettsäuren, Fettsäureestern, Fettsäuresalzen und Mischungen davon ausgewählt ist.

5. Teilchenförmige Aromazusammensetzung nach einem der vorhergehenden Ansprüche, wobei das Lipidmaterial aus Magnesiumstearat, Aluminiumstearat, Natriumstearat, Magnesiumpalmitat, Aluminiumpalmitat, Natriumpalmitat und Mischungen davon ausgewählt ist.

6. Teilchenförmige Aromazusammensetzung nach einem der vorhergehenden Ansprüche, wobei das eine oder die mehreren Hydrokolloide aus der Gruppe bestehend aus Xanthan, Agar, Johannisbrotkernmehl, Guarkernmehl, Cassia-Gum, Tarakernmehl, Tragantgummi, Hafer-Gummi, Karayagummi, Gummi arabicum, Ghatti-Gummi, Polydextrose, Cyclodextrin, nativem Gellan, desacetyliertem Gellan, Gelatine, Alginat, Propylenglykolalginat, Pektin, Carrageenan, Furcelleran, mikrokristalliner Cellulose, Eucheuma-Algenverarbeitungsprodukt, Natriumcarboxymethylcellulose, Methylcellulose und anderen modifizierten Cellulosederivaten, nativer Stärke, modifizierter Stärke, Molkeproteinen, Caseinaten und Mischungen davon ausgewählt sind.

7. Teilchenförmige Aromazusammensetzung nach einem der vorhergehenden Ansprüche, wobei es sich bei dem einen oder den mehreren Hydrokolloiden um sich langsam lösende Hydrokolloide, ausgewählt aus der Gruppe bestehend aus Xanthangummi, Johannisbrotkernmehl, Agar-Agar, Guarkernmehl, Gellan-Gummi, Alginat, Pektin oder Mischungen davon, vorzugsweise Xanthangummi, handelt.

8. Teilchenförmige Aromazusammensetzung nach einem der vorhergehenden Ansprüche, die in Bezug auf das Gesamtgewicht der Zusammensetzung Folgendes umfasst:

0,1-40 Gew.-% an einem oder mehreren filmbildenden Kohlenhydraten, vorzugsweise 5-20 Gew.-%;
0,5-30 Gew.-% an einem oder mehreren Mono-, Di- oder Trisacchariden, vorzugweise 1-10 Gew.-%;
5-30 Gew.-% Aromastoffe;
50-80 Gew.-% sich langsam lösende Hydrokolloide;
1-10 Gew.-% des Lipidmaterials.

9. Teilchenförmige Aromazusammensetzung nach Anspruch 8, wobei das filmbildende Kohlenhydrat aus der Gruppe der modifizierten Stärken, Cellulosederivate und Mischungen davon ausgewählt ist.

10. Teilchenförmige Aromazusammensetzung nach einem der vorhergehenden Ansprüche, wobei die Zusammensetzung einen volumengewichteten durchschnittlichen Durchmesser im Bereich von 125-3000 $\mu$m, vorzugweise im Bereich von 250-1000 $\mu$m, aufweist.

11. Verfahren zur Herstellung einer teilchenförmigen Aromazusammensetzung wie in einem der vorhergehenden Ansprüche definiert, dass das Mischen von Wasser und einer Kombination aus, in Bezug auf das Gesamtgewicht der Zusammensetzung, 0,1- 40 Gew.-% Aromastoffen; 10-90 Gew.-% an einem oder mehreren Hydrokolloiden; und 0,1-50 Gew.-% Lipidmaterial mit einem Schmelzpunkt oberhalb von 75°C unter Hochscherbedingungen und einen anschließenden Trocknungsschritt umfasst.

12. Verfahren zur Herstellung einer teilchenförmigen Aromazusammensetzung wie in einem der vorhergehenden Ansprüche definiert, dass das trockene Vermischen einer Kombination von 0,1-40 Gew.-% Aromastoffen, 10-90 Gew.-% an einem oder mehreren Hydrokolloiden und 0,1-50 Gew.-% Lipidmaterial mit einem Schmelzpunkt oberhalb von 75°C und anschließendes Extrudieren der erhaltenen trockenen Mischung umfasst.

13. Nahrungsmittelprodukt, das 0,01-30 Gew.-% einer teilchenförmigen Aromazusammensetzung nach einem der Ansprüche 1 bis 10 umfasst.

14. Verfahren zur Herstellung eines Nahrungsmittelprodukts, wobei das Verfahren das Kombinieren einer Aromazusammensetzung nach einem der Ansprüche 1 bis 10 mit einem oder mehreren anderen Nahrungsmittelbestandteilen umfasst.

**Revendications**

1. Composition aromatisante particulaire comprenant, par rapport au poids total de la composition, de 0,1 à 40 % en poids de substances aromatisantes ; de 10 à 90 % en poids d'un ou de plusieurs hydrocolloïdes et de 0,1 à 50 % en poids de matière lipidique ayant un point de fusion supérieur à 75 °C, de préférence supérieur à 90 °C, la matière lipidique à point de fusion élevé étant dispersée dans une matrice hydrocolloïde sous la forme d'éléments discrets.

2. Composition aromatisante particulaire selon la revendication 1, comprenant ledit un ou lesdits plusieurs hydrocolloïdes en une quantité allant de 30 à 85 % en poids, par rapport au poids total de la composition.

3. Composition aromatisante particulaire selon la revendication 1 ou la revendication 2, la composition comprenant de 0 à 6 % en poids d'eau.

4. Composition aromatisante particulaire selon l'une quelconque des revendications précédentes, la matière lipidique étant choisie parmi les cires, les acides gras, les esters d'acides gras, les sels d'acides gras et les mélanges de ceux-ci.

5. Composition aromatisante particulaire selon l'une quelconque des revendications précédentes, la matière lipidique étant choisie parmi le stéarate de magnésium, le stéarate d'aluminium, le stéarate de sodium, le palmitate de magnésium, le palmitate d'aluminium, le palmitate de sodium et les mélanges de ceux-ci.

**6.** Composition aromatisante particulaire selon l'une quelconque des revendications précédentes, ledit un ou lesdits plusieurs hydrocolloïdes étant choisis parmi le groupe constitué par le xanthane, l'agar, la farine de graines de caroube, la gomme de guar, la gomme de casse, la gomme de tara, la gomme adragante, la gomme d'avoine, la gomme karaya, la gomme arabique, la gomme ghatti, le polydextrose, la cyclodextrine, la gellane native, la gellane désacylée, la gélatine, l'alginate, l'alginate de propylèneglycol, la pectine, le carraghénane, le furcellérane, la cellulose microcristalline, l'algue eucheuma transformée, la carboxyméthylcellulose de sodium, la méthylcellulose et autres dérivés de la cellulose modifiée, l'amidon natif, l'amidon modifié, les protéines du lactosérum, les caséinates et les mélanges de ceux-ci.

**7.** Composition aromatisante particulaire selon l'une quelconque des revendications précédentes, ledit un ou lesdits plusieurs hydrocolloïdes étant des hydrocolloïdes à dissolution lente choisis parmi le groupe constitué par la gomme xanthane, la farine de graines de caroube, l'agar-agar, la gomme de guar, la gomme gellane, l'alginate, la pectine et les mélanges de ceux-ci, de préférence la gomme xanthane.

**8.** Composition aromatisante particulaire selon l'une quelconque des revendications précédentes, comprenant, par rapport au poids total de la composition :

0,1 à 40 % en poids d'un ou de plusieurs hydrates de carbone filmogènes, de préférence de 5 à 20 % en poids ;
0,5 à 30 % en poids d'un ou de plusieurs mono, di ou trisaccharides, de préférence de 1 à 10 % en poids ;
5 à 30 % en poids de substances aromatisantes ;
50 à 80 % en poids d'hydrocolloïdes à dissolution lente ;
1 à 10 % en poids de matière lipidique.

**9.** Composition aromatisante particulaire selon la revendication 8, l'hydrate de carbone filmogène étant choisi parmi le groupe constitué par des amidons modifiés, des dérivés de la cellulose et des mélanges de ceux-ci.

**10.** Composition aromatisante particulaire selon l'une quelconque des revendications précédentes, ladite composition présentant un diamètre moyen pondéré en volume compris dans la gamme de 125 à 3000 $\mu$m, de préférence de 250 à 1000 $\mu$m.

**11.** Procédé de production d'une composition aromatisante particulaire selon l'une quelconque des revendications précédentes, comprenant un mélange à cisaillement élevé d'eau et d'une combinaison, par rapport au poids total de la composition, de 0,1 à 40 % en poids de substances aromatisantes ; de 10 à 90 % en poids d'un ou de plusieurs hydrocolloïdes et de 0,1 à 50 % en poids de matière lipidique ayant un point de fusion supérieur à 75 °C et une étape de séchage consécutive.

**12.** Procédé de production d'une composition aromatisante particulaire selon l'une quelconque des revendications précédentes, comprenant le mélange à sec d'une combinaison de 0,1 à 40 % en poids de substances aromatisantes, de 10 à 90 % en poids d'un ou de plusieurs hydrocolloïdes et de 0,1 à 50 % en poids de matière lipidique ayant un point de fusion supérieur à 75 °C et ensuite l'extrusion du mélange sec obtenu.

**13.** Produit alimentaire comprenant de 0,01 à 30 % en poids d'une composition aromatisante particulaire selon l'une quelconque des revendications 1 à 10.

**14.** Processus de fabrication d'un produit alimentaire, ledit processus comprenant la combinaison d'une composition aromatisante selon l'une quelconque des revendications 1 à 10 avec un ou plusieurs autres produites alimentaires.

# Fig 1

# Fig 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0135764 A
- WO 02065858 A
- US 20020192352 A
- US 5064669 A

### Non-patent literature cited in the description

- **S. ARCTANDER.** *Perfume and Flavor Materials of Natural Origin,* 1996
- **T.E. FURIA et al.** CRC Fenaroli's Handbook of Flavor Ingredients. Cleveland, CRC Press Inc, 1975
- **H.B. HEATH.** Source Book of-Flavors. The Avi Publishing Company Inc, 1981